# EUROPEAN PATENT APPLICATION

(11) **EP 4 492 563 A1**
(43) Date of publication of application: **15.01.2025**
(21) Application number: 23185033.0
(22) Date of filing: 12.07.2023
(51) Int. Cl.: H01M 50/60, H01M 50/609, H01M 50/627, H01M 50/636, H01M 50/645

(54) **ELECTROCHEMICAL CELL, LID THEREFOR AND METHOD OF FILLING AN ELECTROLYTE INTO SUCH ELECTROCHEMICAL CELL**

(71) Applicant: BIOTRONIK SE & Co. KG, 12359 Berlin (DE)
(72) Inventor: Starke, Marcel, 15732 Eichwalde (DE); Romberg, Jan, 12347 Berlin (DE); Freyer, Nico, 01454 Radeberg (DE)
(74) Representative: Biotronik Corporate Services SE

(57) **Abstract**

The invention refers to a casing part (3, 103, 203, 303, 403, 503) for an electrochemical cell (1) comprising a filling port (20, 120, 220, 320, 420, 520) for an electrolyte (8), wherein the filling port comprises a closing element (26, 126, 226, 326, 426, 526), wherein the closing element is a flap valve or a plug, wherein the plug comprises a penetrable elastomer material. The plug may comprise at least three stacked silicone layers having different viscosities. The invention is further directed to an electrochemical cell comprising such casing part and a method of filling an electrolyte into such electrochemical cell.

## Description

The present invention relates to an electrochemical cell and a casing part therefor, particularly a lid, as well as to a method of filling an electrolyte into such electrochemical cell.

Electrochemical cells converting chemical energy to electrical energy usually comprise a hollow outer casing that is hermetically closed. Therein, the casing may comprise a beaker portion and a lid (sometimes also referred to as header) Alternatively, the casing of such electrochemical cell may be formed by two clam shell. Usually, the outer casing encases a cathode, an anode, a separator and an electrolyte wherein the electrolyte is a fluid for many cell types that is filled into the electrochemical cell during one of the final manufacturing steps of such electrochemical cell.

The casing of such electrochemical cell typically comprises at least on throughgoing opening configured to receive an electrical feedthrough and a further throughgoing opening configured as an electrolyte filling port. Here, the two openings may be arranged on different casing parts or one casing part, e.g. the lid. The electrical feedthrough comprises a conductive pin which is in electrical connection to either the anode or the cathode while the respective other electrode may be fed out of the electrochemical cell an additional feedthrough or may be connected to the casing if the casing is made from an conductive material, e.g. a metal such as titanium or a titanium alloy.

A typical electrochemical cell has a filling port which receives a ball seal after filling to fluid tightly pre-close the port after filling. Usually then, the upper end section of the filling port is cleaned from the electrolyte and other contamination such as silicone oil from the ball seal and afterwards a fill port cover is attached to the upper end section of the filling port to hermetically seal the filling port.

Introducing a ball seal for pre-closure of the filling port after filling is a time consuming step during manufacturing. Further, the ball seal requires a lid with a considerable thickness and volume which is at the expense of interior volume of the electrochemical cell (if the overall volume is kept constant) and hence capacity of this cell. Additionally, the above-mentioned separate time consuming cleaning step is necessary. Furthermore, for cleaning relating to silicone oil often used in connection with a ball seal hazardous chemicals need to be used.

Accordingly, it is an objective of the present invention to provide a less time consuming method of filling the electrolyte into a electrolyte container of the electrochemical cell that allows reduction of the lid thickness thereby increasing the interior volume of the electrochemical cell and its capacity. It is an objective to create a respective lid and electrochemical cell for such method.

The above problem is solved by a lid for an electrochemical cell having the features of claim 1, an electrochemical cell having the features of claim 9 and a method of filling an electrolyte into such electrochemical cell having the features of claim 11.

In particular, the above problem is solved by a casing part for an electrochemical cell comprising a filling port or channel for an electrolyte, wherein the filling port or channel comprises a closing element, wherein the closing element is a flap valve or a plug or bung, wherein the plug or bung comprises a penetrable elastomer material.

Particularly, the above-mentioned electrochemical cell comprises a casing having at least two casing part, wherein one of which is formed by the casing part according to the invention. Here, the casing parts of the casing are preferably designed to hermetically enclose an internal space from the environment, wherein necessary components of the electrochemical cell, e.g. anode, cathode, electrolyte, separator, etc., are arranged in the internal space of the electrochemical cell and hermetically sealed from the environment by the casing, or the casing parts, respectively.

In one embodiment, the casing of the electrochemical cell is made from an electrically conductive material, particularly a metal or metal alloy, preferably titanium, a titanium alloy, stainless steel, or aluminum.

In one embodiment, the casing of the electrochemical cell is formed by a lid and a beaker, wherein the lid or the beaker is formed by the casing part according to the invention. Preferably, the casing part according to the invention formed as a lid, wherein the lid is configured to hermetically close the other casing part formed as beaker of the electrochemical cell. For example, the beaker is a hollow casing part open at one end consisting of one part or several, connected parts. At the open end of the beaker, the lid is attached and thereby seals the beaker. The form of the lid may be disc-shaped, for example having an elongated form. The form of the lid may be adapted to the form of the open end of the beaker. The lid may be fixed to the open end of the outer casing or accommodated within the open end of the beaker by e.g. soldering, brazing, or welding, preferably by laser welding.

In another embodiment, the casing of the electrochemical cell is formed by two clam shells, wherein one of the clam shells is formed by the casing part according to the invention. Here, both clam shells are configured to be hermetically closed, e.g. by means of soldering, brazing or welding, preferably laser welding.

The filling port is particularly designed in form of a straight channel in fluid communication to the internal space of the electrochemical cell. The filling port is a throughgoing opening / channel that extends through the casing part, e.g. the lid, the beaker or the clam shell as described above, from its one (e.g. upper) surface to its other (opposite, e.g. lower) surface. The one surface of the casing part according to the invention forms the outer surface of the of the electrochemical cell if the casing part according to the invention is attached to another casing part, whereas the other surface of the lid is located within the interior of the outer casing. The filling port may extend perpendicular to the one surface and/or the other surface of the casing part according to the invention or inclined thereto. The filling port may comprise at least two sections having different diameter, wherein the diameter is the inner dimension of the channel perpendicular to its longitudinal axis.

In one embodiment, prior to filling and prior to attachment of the casing part according to the invention to another casing part, the filling port of the casing part according to the invention comprises a closing element. The closing element allows electrolyte filling through this closing element within a pre-determined time period and automatically or autonomously closes the port prior and/or afterwards fluid-tightly or at least almost fluid-tightly without any additional time-consuming and costly action. The closing element provides an inherent closing feature caused by its material or its mechanical construction.

Advantageously, by use of the closing element the casing part according to the invention does not require an additional closing element such as a ball seal know in the prior art (i.e. avoids addition of a ball seal after filling) so that the casing part according to the invention may be formed with a smaller thickness (i.e. the overall dimension of the lid from the one surface to the other surface). Accordingly, a greater interior volume is available for the electrochemical elements of the electrochemical cell so that a greater capacity may be realized.

The closing element may be realized as a flap valve or as a plug or bung, wherein the plug or bung comprises a penetrable elastomer material. The elastomer material is configured such by its material and/or accommodation within the filling port that a penetration channel formed by a needle has a self-closing/self-sealing feature. The flap valve comprises a pivotable flap that closes the filling port, for example in a section at the other end of the filling port (i.e. the lower section of the filling port). The flap is pre-tensioned such, that it may be opened if it is pushed open by a filling device, for example a needle or a needle-like protrusion of a filling device introduced into the filling port for electrolyte filling.

Alternatively, the bung may comprise a penetrable elastomer material, for example silicone or silicone rubber, or a thermoplastic elastomer particularly a silicone, a silicone rubber, or a thermoplastic elastomer being injection moldable. In one embodiment, the plug or bung essentially consists of the penetrable elastomer material or comprises a membrane which essentially consists of the penetrable elastomer material. In both cases, the elastomer may be a self-closing/self-sealing elastomer, e.g. a self-sealing silicone, that may be penetrated but automatically or autonomously closes this penetration hole after electrolyte filling. The elastomer material may be punctured several times before it weakens significantly. To fill the electrolyte into the container located within the interior of the electrochemical cell a filling device may be used comprising a blunt or non-coring needle, for example a Huber point needle (Cytoncan ^{®} needle, Surecan ^{®} needle), which is configured to penetrate the bung, and the electrolyte is provided to the container through this needle.

Particularly, the needle or the needle-like protrusion comprises a channel for transporting the fluid electrolyte to its tip, wherein the needle or the needle-like protrusion comprises an outlet opening for the electrolyte at its foremost tip.

As the filling device uses a needle or a needle-like protrusion to fill the electrolyte into the electrochemical cell, a cleaning step may advantageously be omitted after filling.

In one embodiment, the plug or bung may be molded within the filling port, for example at one end section. Alternatively, the plug or bung may be a pre-formed component, which is pressed into the filling port, for example from its one or other end section. If applicable, the pre-formed component may be moved within the filling port until it reaches a protrusion formed at the inner wall of the filling port wherein the protrusion comprises a stop surface for the pre-formed component.

In one embodiment, the plug or bung may comprise at least three stacked membranes (layers) consisting of silicone, a silicone rubber, and/or a thermoplastic elastomer, wherein a center membrane (layer) has a lower viscosity than one membrane located further at the one end and one membrane located further at the other end of the stack. The membranes located at the one and the other end support and/or frame the center membrane. The membranes, for example, extend into the direction which is perpendicular to the longitudinal direction of the filling port. The stacked membranes may be penetrated by a blunt needle of the filling device and due to the low viscosity of the center membrane the penetration channel within the center membrane is automatically closed after withdrawal of the needle after filling. The membranes are attached to each other by, e.g., gluing, or ultrasound welding.

As indicated above, in one embodiment, the closing element is accommodated at an end section or a center section of the filling port.

In one embodiment, the plug or bung comprises at least one perforation (slit) which is compressed closed. In particular, if the plug or bung is a pre-formed component that is pressed within the filling port, it may comprise at least one throughgoing perforation (slit) or may receive at least one such perforation after accommodation within the filling port. The at least one perforation is compressed closed by the inner wall of the filling port as the bung is press-fitted within the filling port.

In one embodiment, the plug or bung, or the flap valve is located adjacent a section of the filling port having a reduced diameter (i.e. undercut section). The section of the filling port having a reduced diameter may form a stop surface for the movement of the bung into the filling port or for the, e.g. pivoting, closure movement of the pre-stressed flap after filling.

In one embodiment, the filling port further adapted to receive a cover which permanently seals the filling port after electrolyte filling. Preferably, the cover made from the same material as the casing part according to the invention, e.g. titanium or a titanium alloy. Particularly, the cover is attached to the upper end of the filling port after electrolyte filling. It may be welded to the filling port such that it closes the filling port hermetically, for example by laser welding. The cover may be designed in form of a disc, particularly a flat disc, wherein particularly filling port advantageously may comprise a form-fitting recess located at the outer surface of the casing part according to the invention, i.e. the surface of the casing part according to the invention that forms the outer surface of the electrochemical cell. Preferably, the cover is laser welded at the interface between the cover and the casing part according to the invention.

In one embodiment, the casing part according to the invention further comprises a first additional throughgoing opening, wherein the first additional through going opening is configured to receive a first conductor, particularly designed in form of a pin, wherein the first conductor is configured to extend through the casing part according to the invention and to be electrically connected to an electrode of the electrochemical cell.

In one embodiment, the casing part according to the invention comprises a first electrical feedthrough, wherein the first electrical feedthrough comprises an insulator, particularly made from a plastic material, e.g. an epoxy resin, a silicone, a thermoplastic material, e.g. PEEK or a liquid crystal polymer, a ceramic, a glass or glass solder, a first conductor extending through the insulator and configured to be connected to an electrode of the electrochemical cell having a first polarity, wherein the first conductor is particularly designed in form of a pin, and optionally a sleeve or flange surrounding the insulator. Here, the pin is joined, particularly brazed to the insulator, and the insulator is either joined, particularly brazed, to an inner wall of the additional first throughgoing opening or the sleeve or flange, wherein in the latter case the sleeve or flange is joined, particularly welded to the inner wall of the first additional throughgoing opening. Such electrical feedthrough is particularly applied in case of the casing part according to the invention (and the casing of the electrochemical cell) is made from an electrically conductive material such as metal or metal alloy, e.g. titanium, a titanium alloy, stainless steel or aluminum.

In a further embodiment, the casing part according to the invention comprises a second additional throughgoing opening, wherein the second additional through going opening is configured to receive a second conductor, particularly designed in form of a pin, wherein the second conductor is configured to extend through the casing part according to the invention and to be electrically connected to an electrode having a second polarity opposite to the above stated first polarity. The second conductor may be guided through the casing part according to the invention by means of a second electrical feedthrough arranged in the second additional opening, wherein the second electrical feedthrough may be designed similarly to the above described first electrical feedthrough.

The above problem is also solved by an electrochemical cell a casing formed by at least two casing parts, wherein the casing parts hermetically enclose an internal space of the electrochemical cell,, wherein one casing part is formed by the casing part according to the invention and wherein and the filling port of the casing part according to the invention is in fluid communication with the internal space of the of the electrochemical cell, i.e. connected to the internal space such that a needle or a needle-like protrusion of a filling device may fill electrolyte through the filling port into the internal space of the electrochemical cell according to the invention.

In one embodiment, the casing encases a cathode, an anode, and a separator. In one embodiment, the cathode, the anode, and the separator are accommodated at least partly by the electrolyte container.

The electrochemical cell according to the invention has the advantages indicated with regard to the casing part according to the invention above.

In one embodiment, the electrochemical cell according to the invention is designed as a battery. In another embodiment, the electrochemical cell is designed as an electrolytic capacitor.

Particularly, the above-mentioned electrochemical cell comprises a casing having at least two casing part, wherein one of which is formed by the casing part according to the invention. Here, the casing parts of the casing are preferably designed to hermetically enclose an internal space from the environment, wherein necessary components of the electrochemical cell, e.g. anode, cathode, electrolyte, separator, etc., are arranged in the internal space of the electrochemical cell and hermetically sealed from the environment by the casing, or the casing parts, respectively.

In one embodiment, the casing of the electrochemical cell is made from an electrically conductive material, particularly a metal or metal alloy, preferably titanium, a titanium allow, stainless steel, or aluminum.

In one embodiment, the casing of the electrochemical cell is formed by a lid and a beaker, wherein the lid or the beaker is formed by the casing part according to the invention.

In another embodiment, the casing of the electrochemical cell is formed by two clam shells, wherein one of the clam shells is formed by the casing part according to the invention. Here, both clam shells are configured to be hermetically closed, e.g. by means of soldering, brazing or welding, preferably laser welding.

In one embodiment, the electrochemical cell according to the invention is designed as a primary battery and comprises a first electrode comprising an alkali metal, particularly lithium, sodium or natrium, as electrode active material. In one embodiment, the electrochemical cell comprises a second electrode having a polarity opposite to the first electrode, wherein the second electrode comprises carbon monofluoride (CFx), manganese dixoide (MnO₂), graphite, iodine (I₂), silver vanadium oxide (SVO), copper silver vanadium oxide (CSVO), V₂O₂, TiS₂, CuO₂, Cu₂S, FeS, FeS₂, Ag₂O, Ag₂O₂, CuF, Ag₂CrO₄, CuO, Cu₂P₂O₇, Cu₄P₂O₉, Cu₅P₂O₁₀, Ag₂Cu₂P₂O₈, Ag₂Cu₃P₂O₉, copper vanadium oxide or a mixture thereof as electrode active material.

In another embodiment, the electrochemical cell according to the invention is designed as a secondary battery, wherein the first electrode comprises particularly an alkali metal as an electrode active material, particularly selected from lithium, sodium, potassium, or carbon, particularly graphite, hard carbon or non-graphitizing carbon, and the second electrode comprises as an electrode active material particularly lithium cobalt oxide (LiCoO₂), lithium nickel manganese cobalt oxide (mixed oxides of LiCoO₂, LiNiO₂ and LiMnO₂), lithium nickel cobalt aluminum oxide (NCA), lithium manganese oxide (LiMn₂O₄), or lithium iron phosphate (LiFePO₄).

In a further embodiment, the electrochemical cell according to the invention is designed as a battery (primary battery or secondary battery) and further comprises an electrolyte, preferably a non-aqueous electrolyte, wherein particularly the first electrode comprises as an electrode active material an alkali metal, particularly selected from lithium, sodium or potassium. Suitable electrolytes include, without being restricted to, non-aqueous, preferable aprotic, solvents, such as an ester, an ether and a dialkyl carbonate, particularly tetrahydrofuran, methyl acetate, diglyme (bis(2-methoxyethyl)ether), triglyme (tris(2-methoxyethyl)ether), tetraglyme (tetra(2-methoxyethyl)ether), 1,2-dimethoxyethane, 1,2-diethoxyethane, 1-ethoxy-2-methoxyethane, dimethyl carbonate, diethyl carbonate, dipropyl carbonate, ethyl methyl carbonate, methyl propyl carbonate, ethyl propyl carbonate or a mixture thereof, or a cyclic carbonate, a cyclic ester, a cyclic amide, particularly propylene carbonate, ethylene carbonate, butylene carbonate, γ-butyrolactone, N-methyl pyrrolidinone or a mixture thereof. Suitable electrolytes also comprise polar non-aqueous solvents such as acetonitrile, dimethyl sulfoxide, dimethyl formamide, dimethyl acetamide or a mixture thereof.

In one embodiment, the casing part according to the invention comprises a first electrical feedthrough, wherein the first electrical feedthrough comprises an insulator, particularly made from a plastic material, e.g. an epoxy resin, a silicone, a thermoplastic material, e.g. PEEK or a liquid crystal polymer, a ceramic, a glass or glass solder, a first conductor extending through the insulator and configured to be connected to an electrode of the electrochemical cell having a first polarity, wherein the first conductor is particularly designed in form of a pin, and optionally a sleeve or flange surrounding the insulator. Here, the pin is joined, particularly brazed to the insulator, and the insulator is either joined, particularly brazed, to an inner wall of the additional first throughgoing opening or the sleeve or flange, wherein in the latter case the sleeve or flange is joined, particularly welded to the inner wall of the first additional throughgoing opening. Such electrical feedthrough is particularly applied in case of the casing part according to the invention (and the casing of the electrochemical cell) is made from an electrically conductive material such as metal or metal alloy, e.g. titanium, a titanium alloy, stainless steel or aluminum.

In a further embodiment, the casing part according to the invention comprises a second additional throughgoing opening, wherein the second additional throughgoing opening is configured to receive a second conductor, particularly designed in form of a pin, wherein the second conductor is configured to extend through the casing part according to the invention and to be electrically connected to an electrode having a second polarity opposite to the above stated first polarity. The second conductor may be guided through the casing part according to the invention by means of a second electrical feedthrough arranged in the second additional opening, wherein the second electrical feedthrough may be designed similarly to the above described first electrical feedthrough.

The above problem is also solved by a method of filling an electrolyte into an electrochemical cell as described above comprising the following steps:
- Providing the electrochemical cell according to the invention,
- Providing the electrolyte within a filling device comprising a needle or a needle-like protrusion,
- Penetrating the plug of the filling port by the needle or pivoting the flap valve of the filling port by pushing the flap with the needle or the needle-like protrusion,
- Filling the electrolyte through the needle or the needle-like protrusion into the electrolyte container, and
- Withdrawing the needle or needle-like protrusion from the filling port.

In one embodiment, the above method comprises the further step of permanently sealing the filling port of the casing part according to the invention by a cover, for example by welding (e.g. laser welding).

The above method is less time and cost intensive than the state-of-the-art method because introduction of a ball seal after electrolyte filling and a cleaning step is eliminated. Particularly, no silicone oil is present so that using hazardous chemicals can be avoided.

The various features and advantages of the present invention may be more readily understood with reference to the following detailed description and the embodiments shown in the drawings. Herein schematically and exemplarily,
- Fig. 1: depicts a portion of a first embodiment of a lid of an electrochemical cell in a longitudinal section prior electrolyte filling;
- Fig. 2: shows a portion of a second embodiment of a lid of an electrochemical cell in a longitudinal section prior electrolyte filling;
- Fig. 3: shows a portion of a third embodiment of a lid of an electrochemical cell in a longitudinal section prior electrolyte filling;
- Fig. 4: depicts a needle for a filling device in a side view;
- Fig. 5: shows an enlarged view of the tip of the needle of Fig. 4 in a side view;
- Fig. 6: depicts a portion of a fourth embodiment of a lid of an electrochemical cell in a longitudinal section prior electrolyte filling;
- Fig. 7: shows a portion of a fifth embodiment of a lid of an electrochemical cell in a longitudinal section prior electrolyte filling;
- Fig. 8: shows the portion of the lid of Fig. 7 in a longitudinal section during filling with electrolyte;
- Fig. 9: depicts an enlarged view of a first example tip of a needle of a filling device used for electrolyte filling as shown in Fig. 8;
- Fig. 10: shows an enlarged view of a second example tip of a needle of a filling device used for electrolyte filling as shown in Fig. 8;
- Fig. 11: shows a portion of a sixth embodiment of a lid of an electrochemical cell in a longitudinal section prior electrolyte filling;
- Fig. 12: depicts an embodiment of an electrochemical cell in a longitudinal section.

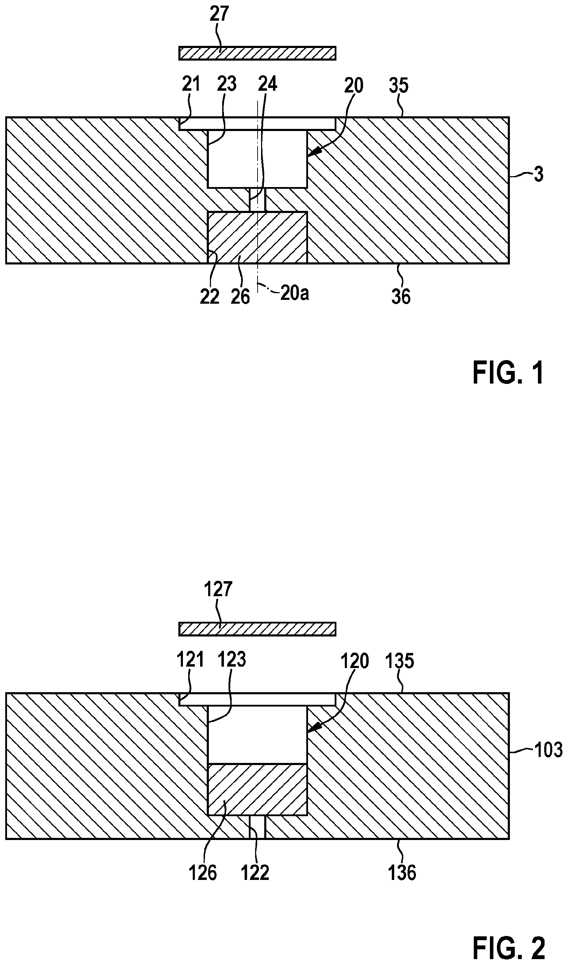

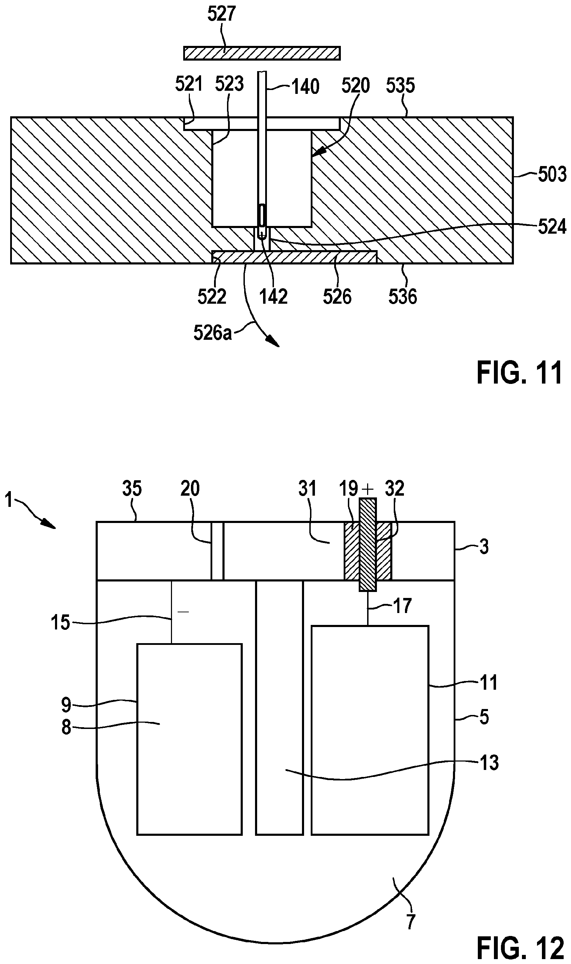

Figures 1 to 3, 6 to 8 and 11 show six different embodiments of a lid of an electrochemical cell which is schematically depicted in Fig. 12. The electrochemical cell 1, for example a Li/CFₓ electrochemical cell, comprises a housing formed by lid 3 and a hollow casing 5, which one end is hermetically closed by the lid. The housing may have any shape, e.g. cuboid, cylindrical, etc. Preferably the housing, i.e. the casing 5 and the lid 3, is made from an electrically conducting material, preferably a biocompatible metal, such as titanium or titanium alloy The housing the electrochemical cell encloses an internal space 7 containing an electrolyte 8 as well as a first electrode (anode) 9, a second electrode (cathode) 11 and at least one separator 13 being arranged between the first 9 and second 11 electrode. The first electrode 9 is electrically connected to the lid 3, preferably by a first current collector 15 , and the second electrode 11 is preferably electrically connected to a pin 32 of an electrically feedthrough arranged in the lid, preferably by by a second current collector 17, wherein the pin 32 is electrically insulated from the lid 3 by an insulator, e.g. made from a glass or a ceramic .

Fig. 1 depicts an enlarged longitudinal section of the lid 3 having the upper surface 35 and a lower surface 36, wherein the upper surface 35 forms an outer surface of the electrochemical cell 1 and the lower surface 36 is located within the electrochemical cell and is used to form a hermetical connection to the outer casing 5. In particular, Fig. 1 shows a portion of the lid 3 containing the throughgoing filling port 20 for the electrolyte prior filling, wherein the filling port 20 is roughly and schematically sketched in Fig. 12 and shown in Fig. 1 in more detail. The filling port 20 is in fluid communication with the internal space 7

The filling port 20 comprises an upper end section 21, a lower end section 22, a first center section 23 and a second center section 24. The sections 21, 22, 23, 24 may be cylindrical sections having a common longitudinal axis 20a and different diameters, wherein the upper end section 21 has the greatest diameter and the second center section 24 has the smallest diameter. The lower end section 22 comprises a silicone plug 26 that is pressed into the lower section prior attachment of the lid 3 to the outer casing 5 of the electrochemical cell 1. As one can derive from Fig. 1 the second center section 24 forms a stop surface for the bung 26 when introducing the plug 26 into the filling port 20, in particular its lower end section 22. Further, there is a disc-shaped cover 27 that will be welded to the upper end of the filling port 20 within the upper end section 21 to permanently and hermetically close the filling port 20 after electrolyte filling.

The second embodiment of a lid 103 is shown in Fig. 2, wherein the portion of the lid 103 comprising the filling port 120 is depicted. The second embodiment of a lid 103 differs from the first embodiment of a lid 3 by the construction of its filling port. It may be used with the electrochemical cell 1 shown in Fig. 12, as well. The components of the lid 103 correspond to the components of the lid 3 where the last two digits of the reference signs are equal. In other words: The reference signs of similar components of the lid 3 and lid 103 differ by the number 100. Accordingly, with regard to the components of the second embodiment of a lid 103 it is referred to the above explanation of the similar components of the lid 3. The same applies analogously to the third embodiment of a lid 203, the fourth embodiment of a lid 303, the fifth embodiment of a lid 403 and the sixth embodiment of a lid 503.

The filling port 120 of lid 103 comprises only one center section 123 which comprises a silicone bung 126 at its lower end. The lower end section 122 of the filling port 120 having a smaller diameter than the lower section 122 forms a stop surface for the bung 126 when it is introduced into the filling port 120 from its upper end.

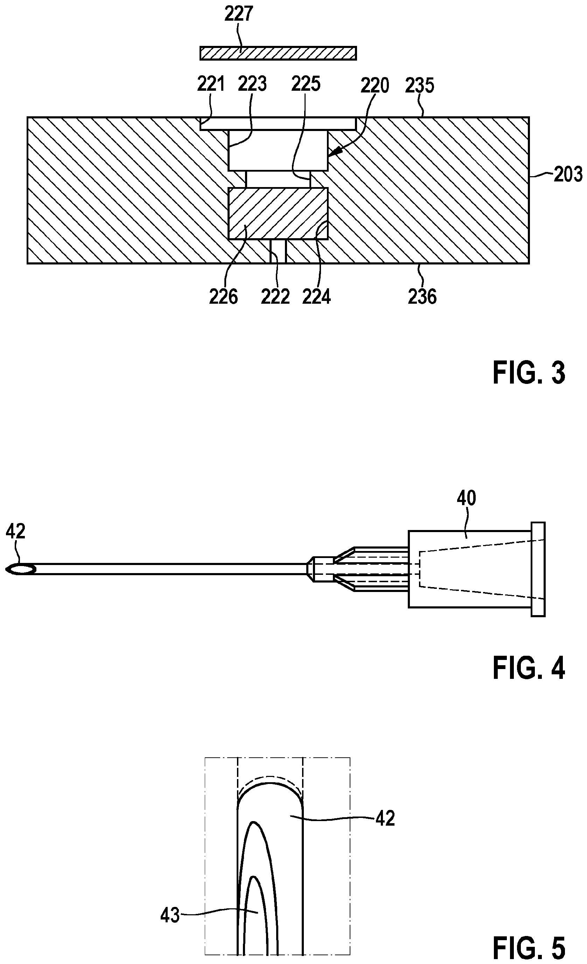

The third embodiment of a lid 203 depicted in Fig. 3 comprises three center sections, namely a first center section 223, a second center section 224 and a third center section 225 located between the first center section 223 and the second center section 224. It has a reduced diameter with regard to these sections 223, 224 and forms a stop surface for the plug 226 at the upper side. The plug 226 is introduced from the upper end of the filling port 220 through the third center section 225.

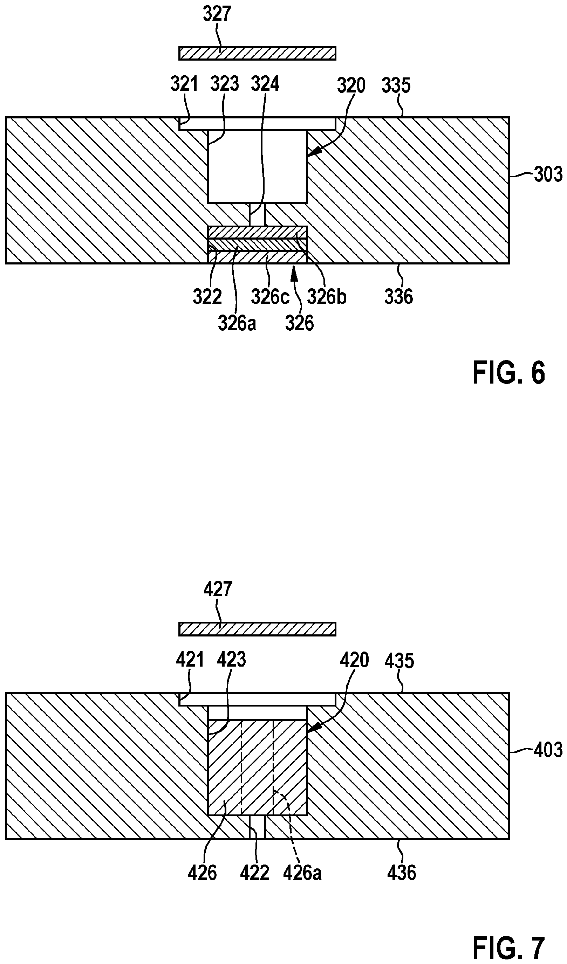

As shown in the fourth embodiment of a lid 303 in Fig. 6 the plug 326 may alternatively comprise three different membrane/layers stacked in longitudinal direction, wherein a center layer 326a is delimited by an upper layer 326b and a lower layer 326c. In the embodiment shown in Fig. 6, the layered plug 326 is located within the lower end section 322 of the filling port 320 but in different embodiments it may be located in other sections of the filling port 320 similarly to the first to third embodiments explained above with regard to the full silicone plug 26, 126, 226. The center layer 326a has a lower viscosity than the upper layer 326b and the lower layer 326c, both adjacent the center layer 326a.

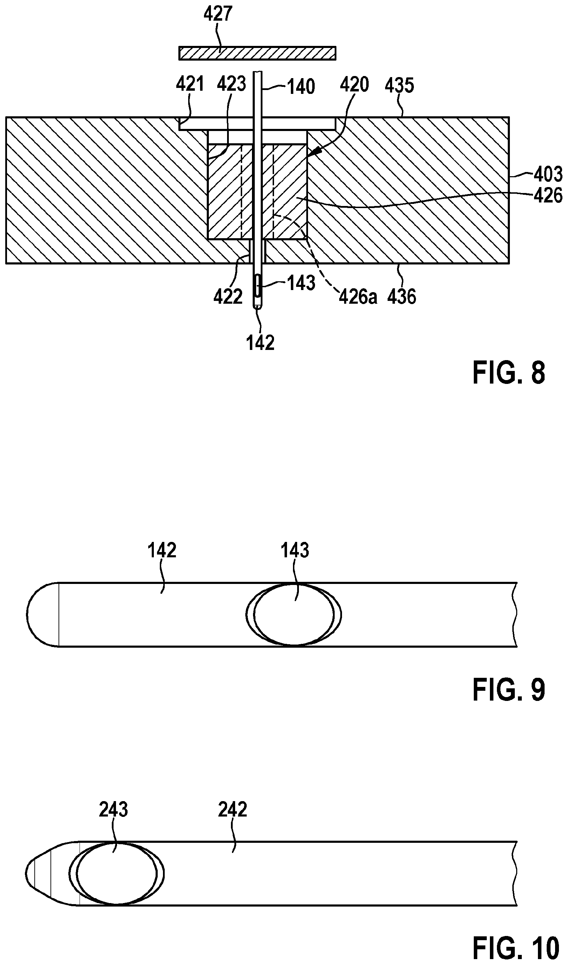

The fifth embodiment of a lid 403 shown in Fig. 7 and 8 comprises a plug 426 located in the center section 423 of the filling port 420 consisting of silicone material. The bung 426 is pressed into the center section 423 so that the inner wall of the center section 423 pre-stresses the bung 426. Additionally, the plug 426 comprises perforations/slits 426a extending in longitudinal direction through the full length of the plug 426. The slits 426a are cut into the plug 426 prior to or after introduction of the plug 426 into the filling plug 420 using a respective cutting tool.

For filling the electrolyte 8 into the container 7 the electrochemical cell 3, 103, 203, 303, 403 is provided comprising the casing 5, wherein the lid 3, 103, 203, 303, 403 is hermetically attached to the casing 5 containing the above components. Further, a filling device is provided containing the electrolyte 8, for example, 1M LiClO4 in 1,2-dimethoxyethane, ethylene carbonate and propylene carbonate (4:4:2), and a needle in fluid communication with the electrolyte 8 reservoir. The needle may be a needle 40 having a blunt, non-coring needle tip 42 as shown in Fig. 4 and 5. The needle 40 further comprises an outlet opening 43 for the fluid electrolyte, for example a liquid electrolyte. Alternatively, a blunt needle having a tip 142 and an outlet opening 143 or a blunt needle having a tip 242 and an outlet opening 243 as shown in Fig. 9 and 10 may be used. The needles shown in Fig. 9 and 10 differ in the form of the needle tips 142, 242 and the positions of the outlet opening 143, 243. The needle 42 will punch a hole into the plug 26/126/226, for sealing the plug needs to be able to close the hole e.g. by means of pre-strain and creeping or elastic behavior. The needles 142 and 242 do not punch any hole into the plug but or only e.g. a slit without any excavated volume or pushes the flap 526.

For filling the electrolyte 8 into the electrochemical cell, the internal space is preferably evacuated, and the needle 140 is inserted into the filling port 420 as shown in Fig. 8 parallel to the longitudinal axis (see, for example axis 20a of Fig. 1). Thereby, the needle tip 142 penetrates the plug 426 along one pre-cut perforation 426a located within the plug 426. The needle tip 142 is advanced so far into the electrochemical cell that the needle tip 142, particularly its outlet opening 143, is accommodated within the container 7. Then, the electrolyte is filled into the internal space 7 via the needle 140 by suction of the vacuum in the internal space. Afterwards, the needle 140 is withdrawn from the filling port 420. As the plug having perforations 426a is force-fit into the center section 423 of the filling port 420 the material of the plug is under compression such that the slit 426 is closed after withdrawal of the needle 140 and forms an effective seal between the reservoir 7 and the upper end of the filling port 420. In the next step, the cover 427 is welded within the upper end section 421 of the filling port 420 to the lid 403, for example by laser welding in the area of the outer circumference of the cover 427. Thereby the filling port 420 is hermetically closed.

An analogous method for electrolyte filling may be used with the embodiments of a lid shown in Fig. 1 to 3 and 6. With regard to the embodiments of Fig. 1 to 3 the blunt or non-coring needle 40 (see Fig. 4 and 5) penetrates the silicone plug 26, 126, 226 because of its elastomer structure. As the plug 26, 126, 226 is press-fit into the respective port section 22, 123, 224 the penetration channel closes after withdrawal of the needle thereby separating the inner volume of the container from the upper end of the filling port 20, 120, 220. Further, analogous to the above method, the cover 27, 127, 227 is welded to the upper section 21, 121, 221 of the respective filling port 20, 120, 220 after withdrawal of the needle.

With regard to the embodiment shown in Fig. 6, the penetration of the needle, electrolyte filling, withdrawal of the needle and welding of the cover 327 to the upper section 321 of the filling port 220 is executed in an analogous way as explained above. In this embodiment, the center layer 326a of the stacked layers reliably closes a penetration channel provided by a needle prior and during filling after withdrawal of the needle caused by its low viscosity.

Referring to the sixth embodiment of a lid 503 this lid comprises a flap valve having a flap 526 within the lower section 522 of the filling port 520. The flap 526 is pivotably attached within the filling port 520 such that it opens by pivoting if pushed by a needle advancing from the upper end of the filling port 520 as indicated in Fig. 11 by arrow 526a. Accordingly, the needle 140 of the filling device pushes the flap 526 such that it opens for electrolyte filling of the container of the electrochemical cell. The flap 526 returns to its initial position shown in Fig. 11 in which the filling port 520 is closed if the needle 140 is withdrawn from the filling port 520. Afterwards, the cover 527 may be welded to the upper section 521 of the filling port 520 as described above with regard to the first to fifth embodiment. Particularly, the filling device is also configured to create a vacuum in the internal space before filling-in the electrolyte. After evacuating the internal space, the electrolyte is succeed into the internal space by the vacuum.

The above embodiments show that the electrolyte filling is less time consuming and less cost intensive compared with the state-of-the-art filling method. Further, no cleaning is necessary thereby avoiding the use of hazardous material.

## Claims

1. A casing part (3, 103, 203, 303, 403, 503) for an electrochemical cell (1) comprising a filling port (20, 120, 220, 320, 420, 520) for an electrolyte (8), wherein the filling port comprises a closing element (26, 126, 226, 326, 426, 526), wherein the closing element is a flap valve or a plug, wherein the plug comprises a penetrable elastomer material.

2. The casing part of claim 1, being designed in form of a lid, a beaker, or a clam shell or flange or a feed through.

3. The casing part of claim 1 or 2, wherein the plug (26, 126, 226, 326, 426) consists of the penetrable elastomer material or comprises a membrane or diaphragm (426a, 426b, 426c) which consists of the penetrable elastomer material.

4. The casing part of any one of the previous claims, wherein the closing element (26, 126, 226, 326, 426, 526) is accommodated at an end section or a center section of the filling port (20, 120, 220, 320, 420, 520).

5. The casing part of any one of the previous claims, wherein the plug (426) comprises at least one perforation (426a) which is compressed closed.

6. The casing part of any one of the previous claims, wherein the plug (426) comprises at least three stacked membranes (426a, 426b, 426c) consisting of silicone, wherein a center membrane (426a) has a lower viscosity than one membrane (426b) located further at the one end and one membrane (426c) located further at the other end of the stack.

7. The casing part of any one of the previous claims, wherein the plug or the flap valve is located adjacent a section (24, 122, 222, 225, 324, 422 524) of the filling port (20, 120, 220, 320, 420, 520) having a reduced diameter.

8. The casing part of any one of the previous claims, wherein the filling port further adapted to receive a cover (27, 127, 227, 327, 427, 527) which permanently seals the filling port (20, 120, 220, 320, 420, 520) after electrolyte filling.

9. The casing part of any one of the previous claims, wherein the lid further comprises a first pin (31) that is configured to electrically connect to a cathode (9) of the electrochemical cell and a second pin (32) that is configured to electrically connect to an anode (11) of the electrochemical cell.

10. An electrochemical cell comprising a casing formed by at least two casing parts, wherein the casing parts hermetically enclose an internal space of the electrochemical cell, **characterized in that** one of the casing parts is formed by a casing part according to any one of the preceding claims, and wherein the filling port of the casing part is in fluid communication with the internal space (7) of the electrochemical cell.

11. The electrochemical cell of claim 9, wherein the casing encases a cathode (9), an anode (11), the electrolyte (8) and a separator (13).

12. A method of filling an electrolyte into an electrochemical cell of any one of the claims 10 to 11 comprising the following steps:
providing the electrochemical cell (1),
providing an electrolyte (8) within a filling device comprising a needle (40, 140) or a needle-like protrusion,
penetrating the plug (26, 126, 226, 326, 426) of the filling port by the needle (140) or pivoting the flap valve of the filling port by pushing the flap (526) with the needle (140) or the needle-like protrusion,
filling the electrolyte through the needle or the needle-like protrusion into the electrolyte container (7), and
Withdrawing the needle or the needle-like protrusion from the filling port.

13. The method of claim 12, comprising the further step of permanently sealing the filling port of the casing part by the cover (27, 127, 227, 327, 427, 527), for example by welding.
